# EUROPEAN PATENT APPLICATION

(11) **EP 4 160 760 A1**
(43) Date of publication of application: **05.04.2023**
(21) Application number: 21813229.8
(22) Date of filing: 20.05.2021
(51) Int. Cl.: H01M 8/0267, H01M 8/10, H01M 8/1067, H01M 8/2465, H01M 8/2484, H01M 8/249

(54) **FUEL CELL AND FUEL CELL MANIFOLD**

(30) Priority: 26.05.2020 JP 2020091689
(71) Applicant: KABUSHIKI KAISHA TOSHIBA, Minato-ku Tokyo 105-0023 (JP); Toshiba Energy Systems & Solutions Corporation, Saiwai-ku Kawasaki-shi Kanagawa 2120013 (JP)
(72) Inventor: KANO, Akio, Kawasaki-shi, Kanagawa 212-0013 (JP)
(74) Representative: Hoffmann Eitle
(86) International application number: PCT/JP2021/019257
(87) International publication number: WO 2021/241414

(57) **Abstract**

A fuel cell according to the present embodiment includes a cell stacked body and a manifold. The cell stacked body has elements stacked, each element having: an electrolyte membrane; a fuel electrode and an oxidant electrode between which the electrolyte membrane is interposed; a fuel electrode flow channel plate in which a gas flow channel facing the fuel electrode is provided; and an oxidant electrode flow channel plate in which a gas flow channel facing the oxidant electrode is provided. The manifold is provided on a lateral surface, of the cell stacked body, along a stacking direction of the cell stacked body and feeds a reaction gas to the fuel electrode flow channel plate or the oxidant electrode flow channel plate in the cell stacked body. The manifold includes a gas flow channel part that is provided between a plurality of the cell stacked bodies arranged to line up in a first direction perpendicular to the stacking direction and that allows communication between the cell stacked bodies such that the reaction gas passes through.

## Description

### [Technical Field]

Embodiments according to the present invention relate to a fuel cell and a manifold for a fuel cell.

### [Background Art]

A fuel cell is a power generation device which, via chemical reaction of fuel such as hydrogen and oxidant such as air, directly converts the fuel's chemical energy into electric energy and take this converted energy to the outside. In an external manifold scheme, gas manifolds for feeding a fuel gas, an oxidant gas and the like are provided on the exterior of a stacked body of unit cells (elements).

In the case of the external manifold scheme, however, it is occasionally difficult to increase/decrease (change) output of the fuel cell in accordance with its application.

### [Citation List]

### [Patent Literature]

[Patent Literature 1] Japanese Patent No. 3425086

### [Summary of Invention]

### [Technical Problem]

Therefore, an object of an embodiment of the present invention is to provide a fuel cell and a manifold for a fuel cell capable of more easily modifying output of the fuel cell in an external manifold scheme.

### [Solution to Problem]

A fuel cell according to the present embodiment includes a cell stacked body and a manifold. The cell stacked body has elements stacked, each element having: an electrolyte membrane; a fuel electrode and an oxidant electrode between which the electrolyte membrane is interposed; a fuel electrode flow channel plate in which a gas flow channel facing the fuel electrode is provided; and an oxidant electrode flow channel plate in which a gas flow channel facing the oxidant electrode is provided. The manifold is provided on a lateral surface, of the cell stacked body, along a stacking direction of the cell stacked body and feeds a reaction gas to the fuel electrode flow channel plate or the oxidant electrode flow channel plate in the cell stacked body. The manifold includes a gas flow channel part that is provided between a plurality of the cell stacked bodies arranged to line up in a first direction perpendicular to the stacking direction and that allows communication between the cell stacked bodies such that the reaction gas passes through.

### [Brief Description of Drawings]

[Figure 1] Figure 1 is a perspective view showing an example of a structure of a fuel cell having manifolds taken off.
[Figure 2] Figure 2 is a perspective view showing an example of a structure of the fuel cell in the state where the manifolds are mounted.
[Figure 3] Figure 3 is an exploded perspective view showing an example of a configuration of a fuel cell element.
[Figure 4] Figure 4 shows views showing an example of a configuration of a fuel electrode flow channel plate.
[Figure 5] Figure 5 shows views showing an example of a configuration of an oxidant electrode flow channel plate.
[Figure 6] Figure 6 is a view showing an example of a configuration of a front side of a fastening plate and a configuration of a terminal.
[Figure 7] Figure 7 is a schematic diagram showing a configuration of a fuel cell according to a first embodiment.
[Figure 8] Figure 8 shows schematic diagrams showing configurations of a first manifold, a third manifold, and a fifth manifold according to the first embodiment.
[Figure 9] Figure 9 shows schematic diagrams showing configurations of a second manifold and a fourth manifold according to the first embodiment.
[Figure 10] Figure 10 is a schematic diagram showing arrangement and electric connection of cell stacked bodies according to the first embodiment.
[Figure 11] Figure 11 is a schematic diagram showing arrangement and electric connection of cell stacked bodies according to a modification.
[Figure 12] Figure 12 is a schematic diagram showing a configuration of a fuel cell according to a modification.
[Figure 13] Figure 13 is a schematic diagram showing a configuration of a fuel cell according to a second embodiment.
[Figure 14] Figure 14 is a schematic diagram showing a configuration of a fifth manifold according to the second embodiment.

### [Description of Embodiments]

Hereafter, embodiments according to the present invention will be described with reference to the drawings. These embodiments do not limit the present invention. The drawings are schematic or conceptual, and ratios between the individual portions therein and the like are not necessarily identical to the real ones. In the description and the drawings, the similar elements to those having been described regarding the drawings having already been mentioned are given the same signs, and their detailed description is properly omitted.

### (First Embodiment)

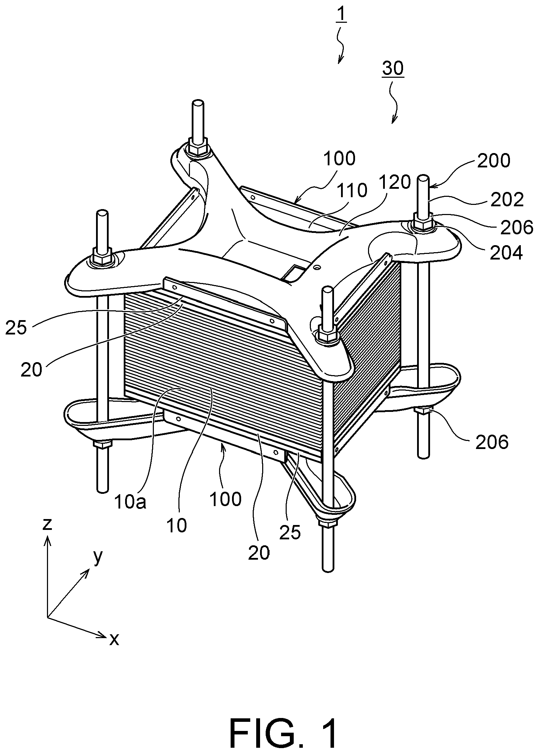

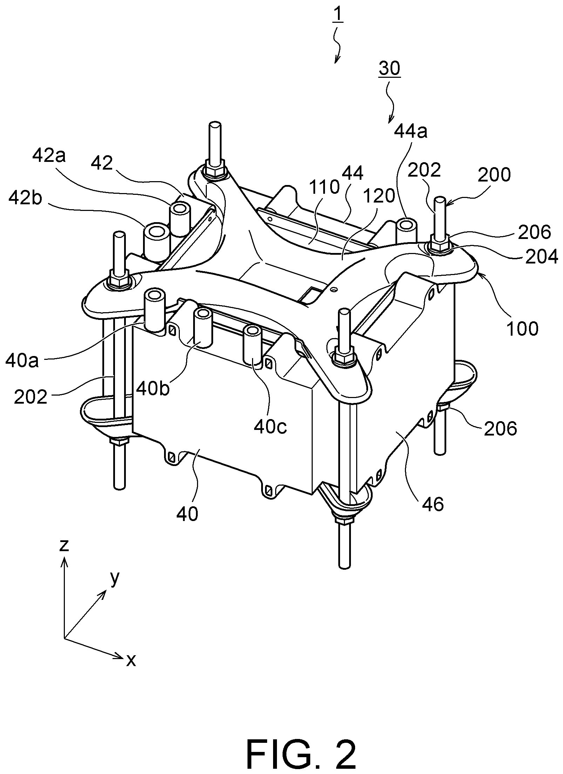

Figure 1 is a perspective view showing an example of a structure of a fuel cell 1 having manifolds taken off. Figure 2 is a perspective view showing an example of a structure of the fuel cell 1 in the state where the manifolds are mounted. As shown in Figure 1 and Figure 2, the fuel cell 1 according to a first embodiment is a structure body which generates electric power via electrochemical reaction in fuel cell elements. Namely, the fuel cell 1 is configured to include a cell stacked body 10, two current collector plates 20, two insulating plates 25, a fuel cell fastening structure body 30, a first manifold 40, a second manifold 42, a third manifold 44, and a fourth manifold 46. The cell stacked body 10 has a plurality of fuel cell elements 10a stacked. Each fuel cell element 10a generates electric power via electrochemical reaction of a fuel electrode gas containing hydrogen and an oxidant electrode gas containing oxygen. Namely, the cell stacked body 10 is a structure body in which the plurality of fuel cell elements 10a are connected in series. A detailed configuration of the fuel cell element 10a is mentioned later. Figure 1 and Figure 2 each show a Z-direction parallel to a stacking direction of the cell stacked body 10, and an X-direction and a Y-direction which are perpendicular to the Z-direction and parallel to each other. When the fuel cell 1 of the present embodiment is installed on a horizontal plane, the Z-direction is parallel to the direction of gravity.

The two current collector plates 20 are arranged on both sides of the cell stacked body 10 in the stacking direction. The two current collector plates 20 are plate-like conductors, and are respectively arranged on both end faces of the cell stacked body 10. The two insulating plates 25 are plate-like insulators, and are respectively arranged between the two current collector plates 20 and the two fastening plates 100. As above, the two current collector plates 20 and the two insulating plates 25 are sequentially arranged on both sides of the cell stacked body 10 in the stacking direction, and integrally fastening these from both sides in the stacking direction with the two fastening plates 100 affords the fuel cell 1.

The fuel cell fastening structure body 30 is a structure body which exerts surface pressure onto the cell stacked body 10, and is configured to include the two fastening plates 100 and a plurality of coupling members 200. The two fastening plates 100 are members which fasten the cell stacked body 10 from both sides, in the stacking direction, of the cell stacked body 10 having a plurality of fuel cell elements stacked. Each fastening plate 100 has a pressing part 110 and beam parts 120. These pressing part 110 and beam parts 120 are integrally formed. Notably, the pressing part 110 and the beam parts 120 may be separately configured.

The coupling members 200 are members which couple the two fastening plates 100. Namely, each coupling member 200 according to the present embodiment has a tie rod 202, two washers 204, and two nuts 206. As shown in Figure 1, the two fastening plates 100 are coupled by the nuts 206 fastened via the washers 204 in the state where the tie rods 202 are inserted through respective opposing hole parts provided in the two fastening plates 100.

As shown in Figure 2, the manifolds 40, 42, 44, and 46 are mounted on lateral surfaces of the cell stacked body 10 along the stacking direction of the cell stacked body 10 in the fuel cell 1. The manifolds are members including spatial regions for feeding reaction gases such as the fuel electrode gas and the oxidant electrode gas, cooling water, and the like.

The first manifold 40 has a cooling water manifold and an oxidant electrode manifold. The second manifold 42 is a fuel electrode manifold. The third manifold 44 is a manifold opposite to the first manifold 40, and has a cooling water manifold and an oxidant electrode manifold. Namely, the first manifold 40 and the third manifold 44 are respectively arranged on opposite sides of the lateral surfaces of the cell stacked body 10.

The fourth manifold 46 is a manifold opposite to the second manifold 42, and is a fuel electrode manifold. Namely, the second manifold 42 and the fourth manifold 46 are respectively arranged on opposite sides of the lateral surfaces of the cell stacked body 10.

Cooling water introduced from a piping joint part 40a is fed from the lateral surface of the cell stacked body 10 and is discharged from a piping joint part 44a via cooling water flow channel grooves of each fuel cell element 10a. Meanwhile, the oxidant electrode gas is introduced from a piping joint part 40b, and the oxidant electrode gas that is not consumed by the electrochemical reaction in the cell stacked body 10 is discharged from a piping joint part 40c. Moreover, the fuel electrode gas is introduced from a piping joint part 42a, and the fuel electrode gas that is not consumed by the electrochemical reaction in the cell stacked body 10 is discharged from a piping joint part 42b.

Gas impermeability is required for the manifolds 40, 42, 44, and 46. Moreover, pressure is higher inside the manifolds than outside the manifolds. Therefore, the manifolds 40, 42, 44, and 46 are configured as molded articles of rigid resin or metal which can be generally resistant to a pressure difference between the interior and the exterior of the manifolds.

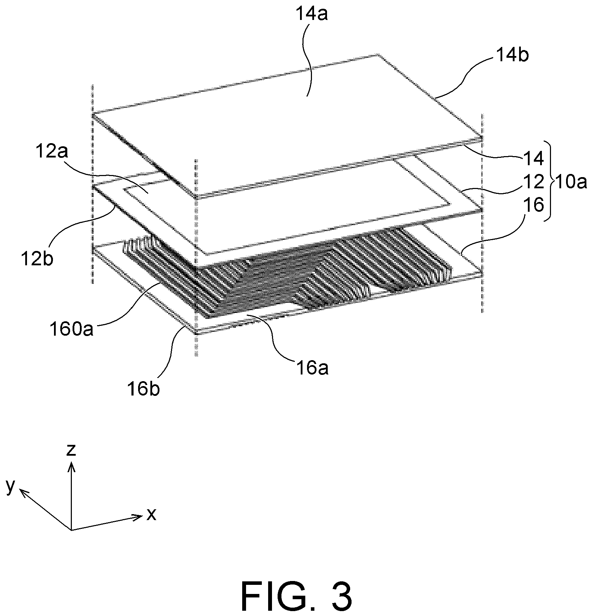

Detailed configuration of the fuel cell element 10a according to the first embodiment is described based on Figure 3 to Figure 5. Figure 3 is an exploded perspective view showing an example of a configuration of a fuel cell element. As shown in Figure 3, the fuel cell element 10a is configured to include an electrolyte membrane 12, a fuel electrode flow channel plate 14, and an oxidant electrode flow channel plate 16. This electrolyte membrane 12 has a fuel electrode formed on one principal plane 12a and an oxidant electrode formed on the other principal plane 12b. Namely, the fuel cell element 10a includes the fuel electrode and the oxidant electrode provided such that the electrolyte membrane 12 is interposed (sandwiched) therebetween. The electrolyte membrane 12 is a polymer electrolyte membrane, for example.

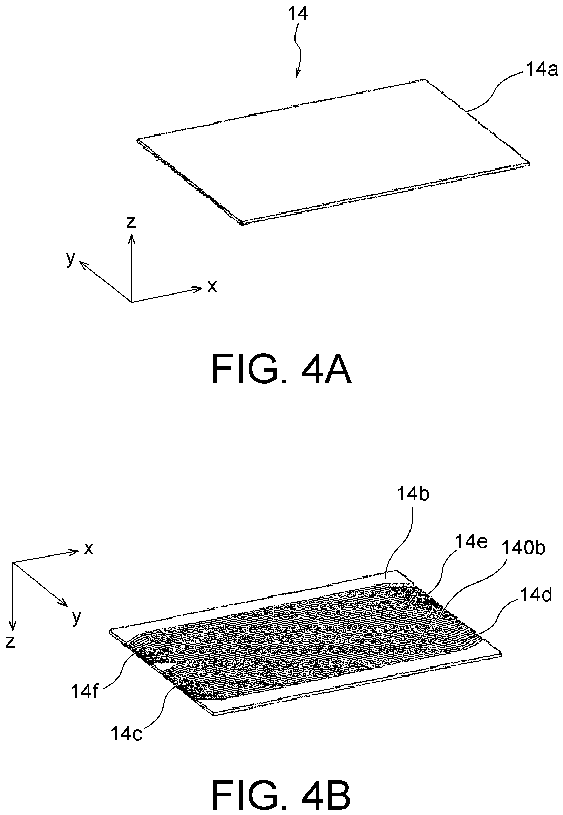

Figure 4 shows views showing an example of a configuration of the fuel electrode flow channel plate 14, Figure 4A is a view showing a shape of a principal plane 14a side of the fuel electrode flow channel plate 14, and Figure 4B is a view showing a shape of a principal plane 14b side of the fuel electrode flow channel plate 14. As shown in this Figure 4A, the principal plane 14a of the fuel electrode flow channel plate 14 is on the opposite side to the fuel electrode of the electrolyte membrane 12, and forms a flat surface.

As shown in Figure 4B, the fuel electrode flow channel plate 14 has, on the principal plane 14b on the fuel electrode side of the electrolyte membrane 12, fuel electrode gas flow channel grooves 140b provided along the fuel electrode. Moreover, the fuel electrode gas flow channel grooves 140b have a first inlet part 14c, a first outlet part 14d, a second inlet part 14e, and a second outlet part 14f. The fuel electrode gas introduced from the first inlet part 14c flows along the fuel electrode gas flow channel grooves 140b and is discharged from the first outlet part 14d. Moreover, the fuel electrode gas introduced from the second inlet part 14e flows along the fuel electrode gas flow channel grooves 140b and is discharged from the second outlet part 14f.

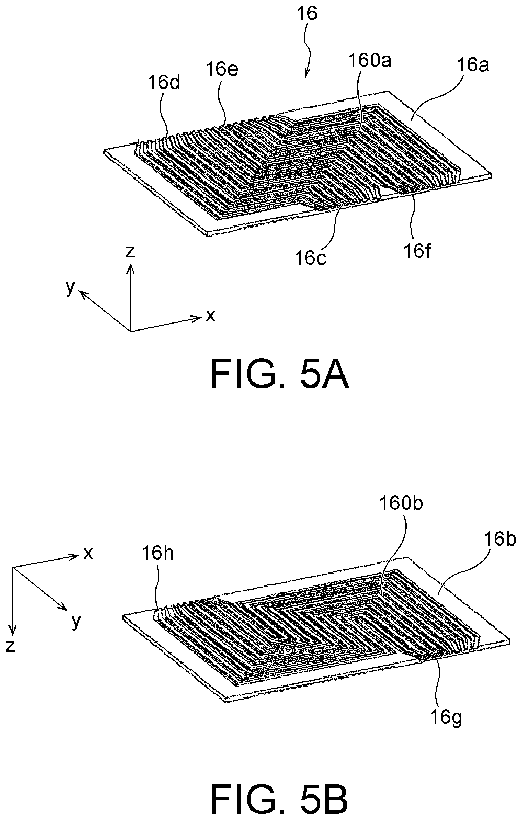

Figure 5 shows views showing an example of a configuration of the oxidant electrode flow channel plate 16, Figure 5A is a view showing a shape of a principal plane 16a of the oxidant electrode flow channel plate 16, and Figure 5B is a view showing a shape of a principal plane 16b on the opposite side to the principal plane 16a of the oxidant electrode flow channel plate 16. As shown in this Figure 5A, the oxidant electrode flow channel plate 16 has, on the principal plane 16a on the oxidant electrode side of the electrolyte membrane 12, oxidant gas flow channel grooves 160a provided along the oxidant electrode. Moreover, the oxidant gas flow channel grooves 160a have a first inlet part 16c, a first outlet part 16d, a second inlet part 16e, and a second outlet part 16f. An oxidant gas introduced from the first inlet part 16c flows along the oxidant gas flow channel grooves 160a and is discharged from the first outlet part 16d. Moreover, the oxidant gas introduced from the second inlet part 16e flows along the oxidant gas flow channel grooves 160a and is discharged from the second outlet part 16f.

As shown in Figure 5B, in the oxidant electrode flow channel plate 16, cooling water flow channel grooves 160b are provided on the principal plane 16b on the opposite side to the oxidant electrode side. The cooling water flow channel grooves 160b have a first inlet part 16h and a first outlet part 16g. The cooling water introduced from the first inlet part 16h flows along the cooling water flow channel grooves 160b and is discharged from the first outlet part 16g. The oxidant electrode flow channel plate 16 is configured of a conductive porous plate having micropores, for example. Moreover, the cooling water flow channel grooves 160b vaporize the cooling water from their surfaces to humidify the fuel cell element 10a. Notably, the oxidant electrode flow channel plate 16 that does not have the cooling water flow channel grooves 160b may be used. When using the oxidant electrode flow channel plate 16 not having the cooling water flow channel grooves 160b, the first manifold 40 and the third manifold 44 may be configured only of oxidant electrode manifolds.

The plurality of these fuel cell elements 10a generate electric power via reaction expressed by chemical formula 1. More in detail, the fuel electrode gas is a hydrogen-containing gas, for example. The fuel electrode gas flows along the fuel electrode gas flow channel grooves 140b of the fuel electrode flow channel plate 14 and causes a fuel electrode reaction to occur. The oxidant gas is an oxygen-containing gas, for example. The oxidant gas flows along the oxidant gas flow channel grooves 160a of the oxidant electrode flow channel plate 16 and causes an oxidant electrode reaction to occur. Using these electrochemical reactions, the fuel cell 1 takes out electric energy from electrodes provided on the current collector plates 20 (Figure 1).

(Chemical Formula 1) Fuel electrode reaction: H₂ → 2H⁺ + 2e⁻Oxidant electrode reaction: 1/2O₂ + 2H⁺ + 2e⁻ → H₂O

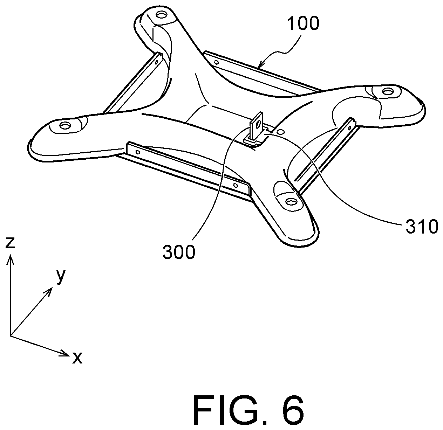

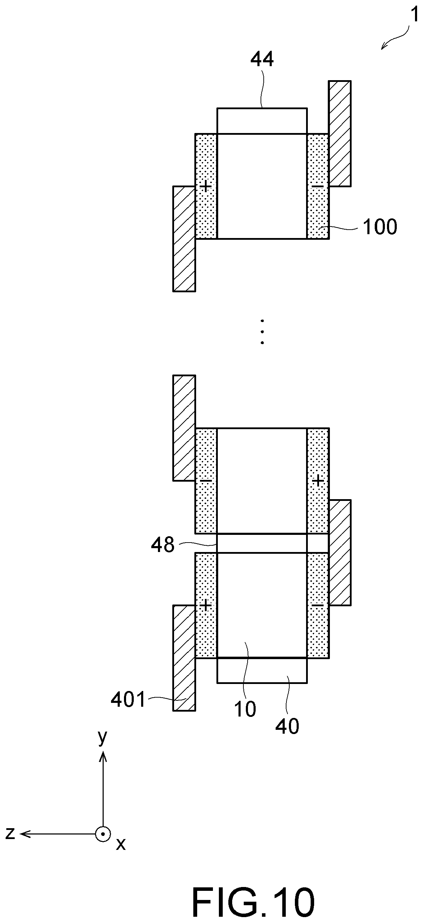

Figure 6 is a view showing an example of a configuration of the front side of the fastening plate 100 and a configuration of a terminal 300. As shown in this Figure 6, the fastening plate 100 has the terminal 300 and a terminal cover 310 mounted. This terminal 300 is electrically connected to the current collector plate 20. Notably, a terminal 300 is also provided on the lower side in the stacking direction, not only on the upper side in the stacking direction. The two terminals 300 provided at both ends in the stacking direction are a positive electrode terminal and a negative electrode terminal, for example. Notably, details of the terminals 300 are described later with reference to Figure 10.

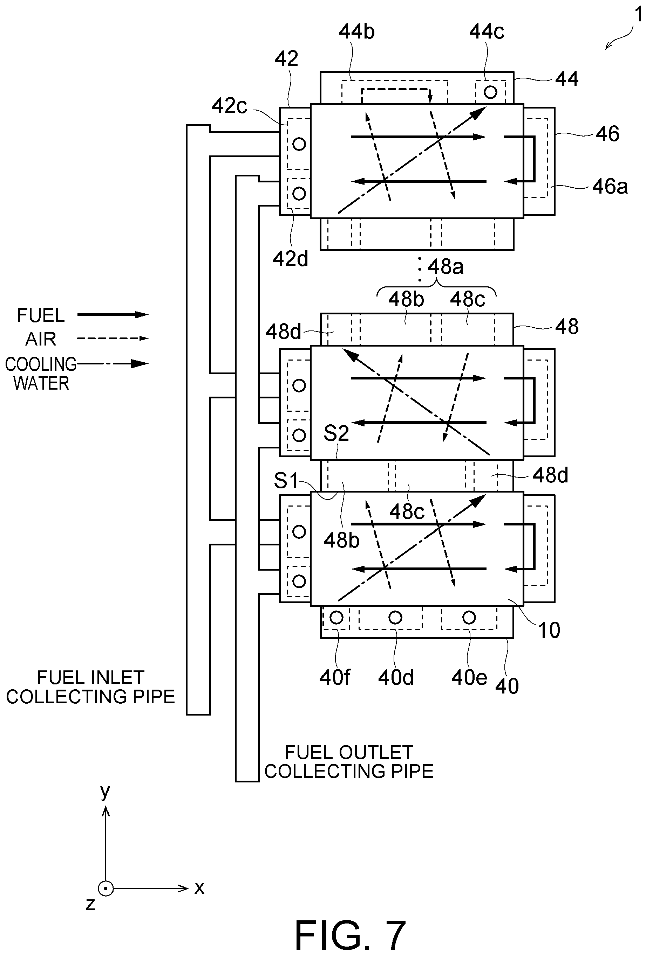

Figure 7 is a schematic diagram showing a configuration of the fuel cell 1 according to the first embodiment. Notably, in Figure 7, circles shown on the manifolds 40, 42, 44, and 46 designates the piping joint parts 40a, 40b, 40c, 42a, 42b, and 44a shown in Figure 2. Moreover, Figure 7 shows collecting pipes for the fuel electrode gas. The collecting pipes for the fuel electrode gas are connected to the piping joint parts 42a and 42b shown in Figure 2. Notably, Figure 7 does not show the fuel cell fastening structure body 30 shown in Figure 1 and Figure 2. The cell stacked bodies 10 may be provided with distances between the cell stacked bodies 10 wide enough, for example, such that the coupling members 200 can be provided therebetween.

In addition to the aforementioned manifolds 40, 42, 44, and 46, the fuel cell 1 further includes fifth manifolds 48. The manifolds 40, 42, 44, 46, and 48 feed the fuel electrode gas to the fuel electrode flow channel plates 14 in the cell stacked bodies 10, and feed the oxidant gas and the cooling water to the oxidant electrode flow channel plates 16 therein.

The plurality of cell stacked bodies 10 are arranged to line up in a first direction perpendicular to the stacking direction. In the example shown in Figure 7, the first direction is the Y-direction. Moreover, in the first embodiment, the cell stacked bodies 10 are arranged such that the orientation of each of them in the Z-direction is reverse to that of adjacent one of the cell stacked bodies 10. The cell stacked bodies 10 are arranged such that each of them rotates relative to adjacent one of the cell stacked bodies 10 by 180° around the Y-direction.

The fifth manifolds 48 are provided between the cell stacked bodies 10 arranged to line up in the first direction (Y-direction). As shown in Figure 7, for the cell stacked body 10 that is at one end in the first direction, the fifth manifold and the first manifold 40 are arranged on the respective opposite lateral surfaces of the cell stacked body 10. Moreover, for the cell stacked body 10 that is at the other end in the first direction, the fifth manifold and the third manifold 44 are arranged on the respective opposite lateral surfaces of the cell stacked body 10.

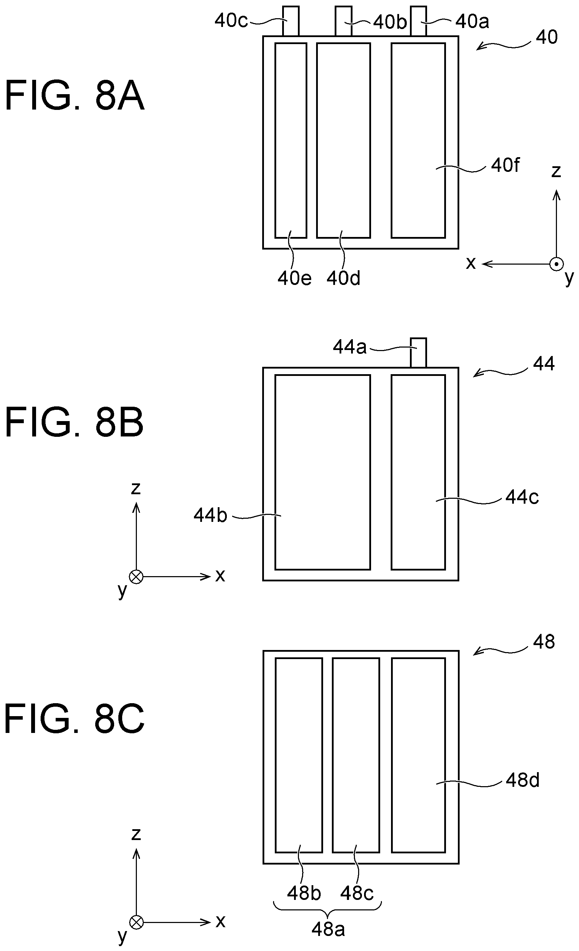

First, configurations of the first manifold 40, the third manifold 44, and the fifth manifold 48 are described with reference to Figure 7 and Figure 8A to Figure 8C.

Figure 8 shows schematic diagrams showing configurations of the first manifold 40, the third manifold 44, and the fifth manifold 48 according to the first embodiment. Figure 8A is a schematic diagram showing a shape of the first manifold 40 as horizontally viewed from the cell stacked body 10 side, Figure 8B is a schematic diagram showing a shape of the third manifold 44 as horizontally viewed from the cell stacked body 10 side, and Figure 8C is a schematic diagram showing a shape of the fifth manifold 48 as horizontally viewed from the side of the cell stacked body 10 that the first manifold 40 is provided on.

As shown in Figure 8A, the first manifold 40 includes the oxidant manifold which feeds the oxidant gas, and the cooling water manifold which feeds the cooling water. The oxidant manifold of the first manifold 40 includes the piping joint part 40b, the piping joint part 40c, a gas introducing part 40d, and a gas discharging part 40e. The cooling water manifold of the first manifold 40 includes the piping joint part 40a and a cooling water introducing part 40f.

The piping joint part 40a is a joint part for feeding and communicates with the cooling water introducing part 40f. This piping joint part 40a feeds the cooling water to the cooling water introducing part 40f.

The piping joint part 40b is a joint part for feeding and communicates with the gas introducing part 40d. This piping joint part 40b feeds the reaction gas (oxidant gas) to the gas introducing part 40d.

The piping joint part 40c is a joint part for discharging and communicates with the gas discharging part 40e. This piping joint part 40c discharges an unreacted gas which is not consumed by the electrochemical reaction from the gas discharging part 40e.

The gas introducing part 40d, the gas discharging part 40e, and the cooling water introducing part 40f are a plurality of spatial region parts arranged along the lateral surface of the cell stacked body 10 along the cell stacking direction. Notably, the gas introducing part 40d, the gas discharging part 40e, and the cooling water introducing part 40f do not communicate (penetrate) in the Y-direction.

Notably, an area where the gas introducing part 40d is in contact with the lateral surface of the cell stacked body 10 is wider than an area where the gas discharging part 40e is in contact with the lateral surface of the cell stacked body 10. The oxidant gas is consumed by the electrochemical reaction more at the gas discharging part 40e than at the gas introducing part 40d. Accordingly, since as the amount of oxygen contained in the oxidant gas becomes smaller at the gas discharging part 40e, an area in contact with the oxidant electrodes becomes smaller, a reaction efficiency of the oxidant electrode reaction on the oxidant electrodes is equalized more in the oxidant electrode flow channels. Nevertheless, not limitedly, the area where the gas introducing part 40d is in contact with the lateral surface of the cell stacked body 10 may be substantially the same as the area where the gas discharging part 40e is in contact with the lateral surface of the cell stacked body 10.

As shown in Figure 8B, the third manifold 44 includes the oxidant manifold which feeds the oxidant gas, and the cooling water manifold which feeds the cooling water. The oxidant manifold of the third manifold 44 includes a gas passing part 44b. The cooling water manifold of the third manifold 44 includes the piping joint part 44a and a cooling water discharging part 44c.

The piping joint part 44a is a joint part for discharging and communicates with the cooling water discharging part 44c. This piping joint part 44a discharges the cooling water from the cooling water discharging part 44c.

The gas passing part 44b and the cooling water discharging part 44c are a plurality of spatial region parts arranged along the lateral surface of the cell stacked body 10 along the cell stacking direction. Notably, the gas passing part 44b and the cooling water discharging part 44c do not communicate (penetrate) in the Y-direction.

As shown in Figure 8C, the fifth manifold 48 includes an oxidant manifold which feeds the oxidant gas, and a cooling water manifold which feeds the cooling water. The oxidant manifold of the fifth manifold 48 includes a gas flow channel part 48a. The cooling water manifold of the fifth manifold 48 includes a cooling water flow channel part 48d.

The gas flow channel part 48a and the cooling water flow channel part 48d are a plurality of spatial region parts arranged along the lateral surface of the cell stacked body 10 along the cell stacking direction. Notably, the gas flow channel part 48a (a first flow channel part 48b and a second flow channel part 48c) and the cooling water flow channel part 48d communicate (penetrate) in the Y-direction.

Notably, a fifth manifold that is rotated by 180° around the Y-direction is provided on adjacent one of the cell stacked bodies 10 (refer to Figure 7). Namely, the shapes (types) of the fifth manifolds 48 may be the same.

As shown in Figure 7, the gas introducing part 40d is provided, for the cell stacked body 10 that is at one end in the first direction, on the lateral surface that is on the opposite side to the gas flow channel part 48a (fifth manifold 48). Moreover, the gas introducing part 40d introduces the reaction gas (oxidant gas) into the cell stacked body 10. More in detail, the gas introducing part 40d introduces the oxidant gas into a first region of the oxidant gas flow channel grooves 160a in the cell stacked body 10. For example, the first region is a region of the oxidant gas flow channel grooves 160a between the first inlet part 16c (Figure 5A) and the first outlet part 16d (Figure 5A).

The gas discharging part 40e is provided on at least part of the lateral surface that the gas introducing part 40d is provided on. Moreover, the gas discharging part 40e discharges the reaction gas (oxidant gas) from the inside of the cell stacked body 10. More in detail, the gas discharging part 40e discharges the oxidant gas from a second region of the oxidant gas flow channel grooves 160a in the cell stacked body 10. For example, the second region is a region of the oxidant gas flow channel grooves 160a between the second inlet part 16e (Figure 5A) and the second outlet part 16f (Figure 5A).

The cooling water introducing part 40f is provided, for the cell stacked body 10 that is at the one end in the first direction, on the lateral surface that is on the opposite side to the gas flow channel part 48a (fifth manifold 48). Moreover, the cooling water introducing part 40f introduces the cooling water into the cell stacked body 10.

The gas passing part 44b is provided, for the cell stacked body 10 that is at the other end in the first direction, on the lateral surface that is on the opposite side to the gas flow channel part 48a (fifth manifold 48). Moreover, the gas passing part 44b allows communication between the first region in the cell stacked body 10 and the second region, in the cell stacked body 10, different from the relevant first region such that the reaction gas (oxidant gas) passes through. More in detail, the gas passing part 44b allows communication between the first region of the oxidant gas flow channel grooves 160a in the cell stacked body 10 and the second region of the oxidant gas flow channel grooves 160a in the cell stacked body 10.

The cooling water discharging part 44c is provided, for the cell stacked body 10 that is at the other end in the first direction, on the lateral surface that is on the opposite side to the gas flow channel part 48a (fifth manifold 48). Moreover, the cooling water discharging part 44c discharges the cooling water from the inside of the cell stacked body 10.

The gas flow channel parts 48a are provided between the plurality of cell stacked bodies 10 arranged to line up in the first direction perpendicular to the stacking direction. More in detail, each gas flow channel part 48a is provided between a first lateral surface S1 of a cell stacked body 10 and a second lateral surface S2, of an adjacent cell stacked body 10, that faces the first lateral surface S1. Moreover, the gas flow channel parts 48a allow communication between the cell stacked bodies 10 such that the reaction gas (oxidant gas) passes through. Accordingly, the oxidant gas passes through so as to penetrate the plurality of cell stacked bodies 10 via the gas flow channel parts 48a. Thereby, the number of connection of cell stacked bodies 10 can be more easily modified in accordance with desired output of the fuel cell 1. Consequently, the output of the fuel cell 1 in the external manifold scheme can be more easily modified.

Moreover, more in detail, each gas flow channel part 48a has the first flow channel part 48b and the second flow channel part 48c.

The first flow channel part 48b allows communication between the first region in the cell stacked body 10 and the first region in the adjacent cell stacked body 10. More in detail, the first flow channel part 48b allows communication between the first region of the oxidant gas flow channel grooves 160a in the cell stacked body 10 and the first region of the oxidant gas flow channel grooves 160a in the adjacent cell stacked body 10.

Notably, as shown in Figure 7, the flow channels for the oxidant gas are not the same in the adjacent cell stacked bodies 10. This is because the cell stacked body 10 is arranged relative to the adjacent cell stacked body 10 such that the orientations of those in the Z-direction are reverse to each other. Namely, for example, in Figure 5A, the oxidant gas advances along the oxidant gas flow channel grooves 160a which are rotated by 180° around the Y-direction. Accordingly, in the adjacent cell stacked body 10, the first region is a region of the oxidant gas flow channel grooves 160a between the second outlet part 16f (Figure 5A) and the second inlet part 16e (Figure 5A), for example. Likewise, in the adjacent cell stacked body 10, the second region is a region of the oxidant gas flow channel grooves 160a between the first outlet part 16d (Figure 5A) and the first inlet part 16c (Figure 5A), for example.

The second flow channel part 48c allows communication between the second region in the cell stacked body 10 and the second region in the adjacent cell stacked body. More in detail, the second flow channel part 48c allows communication between the second region of the oxidant gas flow channel grooves 160a in the cell stacked body 10 and the second region of the oxidant gas flow channel grooves 160a in the adjacent cell stacked body 10. Notably, a partition is provided between the first flow channel part 48b and the second flow channel part 48c.

The cooling water flow channel parts 48d are provided between the plurality of cell stacked bodies 10 arranged to line up in the first direction. Moreover, the cooling water flow channel parts 48d allows communication between the cell stacked bodies 10 such that the cooling water passes through.

Next, flows of the reaction gas (oxidant gas) are described with reference to Figure 7.

In the example shown in Figure 7, the oxidant gas (air) is fed to the gas introducing part 40d via the piping joint part 40b. The oxidant gas flows in the oxidant gas flow channel grooves 160a via the first inlet parts 16c (Figure 5A) of the oxidant electrode flow channel plates 16 that communicate with the gas introducing part 40d among the oxidant electrode flow channel plates 16 stacked in the cell stacked body 10, and is discharged from the first outlet parts 16d (Figure 5A) to the first flow channel part 48b of the fifth manifold 48. The oxidant gas having been discharged to the first flow channel part 48b flows likewise in the oxidant gas flow channel grooves 160a of the oxidant electrode flow channel plates 16, also in the adjacent cell stacked body 10. After that, the oxidant gas is discharged to the gas passing part 44b of the third manifold 44. The oxidant gas having been discharged to the gas passing part 44b flows in oxidant gas flow channel grooves 160a (Figure 5A) via the second inlet parts 16e (Figure 5A) of the oxidant electrode flow channel plates 16 that communicate with the gas passing part 44b among the oxidant electrode flow channel plates 16 stacked in the cell stacked body 10, and is discharged from the second outlet parts 16f (Figure 5A) to the second flow channel part 48c of the fifth manifold 48. The oxidant gas having been discharged to the second flow channel part 48c passes likewise through the oxidant electrode flow channel plates 16, also in the adjacent cell stacked body 10. After that, the oxidant gas is discharged to the gas discharging part 40e of the first manifold 40. The oxidant gas having been discharged to the gas discharging part 40e is discharged from the piping joint part 40c communicating with the gas discharging part 40e.

As above, the oxidant gas flows in the oxidant gas flow channel grooves 160a of the oxidant electrode flow channel plates 16 in the cell stacked bodies 10, and thereby, the oxidant gas is fed to the oxidant electrodes of the electrolyte membranes 12. Meanwhile, the oxidant gas is consumed by the electrochemical reaction. Accordingly, a flow rate of the oxidant gas only has to be made larger as the number of cell stacked bodies 10 which the oxidant gas passes through is larger.

Next, flows of the cooling water are described with reference to Figure 7.

In the example shown in Figure 7, the cooling water is stored in the cooling water introducing part 40f via the piping joint part 40a. The cooling water flows in the cooling water flow channel grooves 160b via the first inlet parts 16h (Figure 5B) of the oxidant electrode flow channel plates 16 that communicate with the cooling water introducing part 40f, and is discharged from the first outlet parts 16g (Figure 5B) to the cooling water flow channel part 48d of the fifth manifold 48. The cooling water having been discharged to the cooling water flow channel part 48d flows likewise in the cooling water flow channel grooves 160b of the oxidant electrode flow channel plates 16, also in the adjacent cell stacked body 10. After that, the cooling water is discharged to the cooling water discharging part 44c of the third manifold 44. The cooling water stored in the cooling water discharging part 44c is discharged from the piping joint part 44a communicating with the cooling water discharging part 44c. As above, the cooling water flows in the cooling water flow channel grooves 160b of the oxidant electrode flow channel plates 16 in the cell stacked bodies 10, and thereby, the cell stacked bodies 10 are cooled.

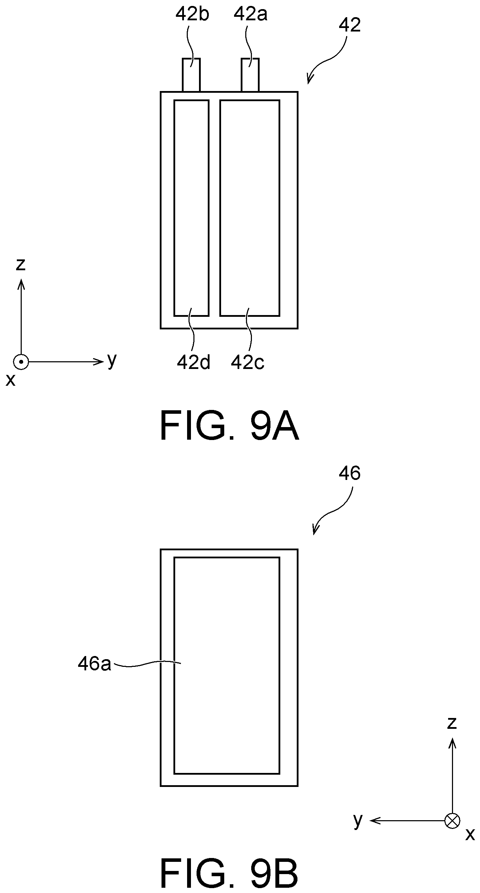

Next, configurations of the second manifold 42 and the fourth manifold 46 are described with reference to Figure 7 and Figure 9A to Figure 9B.

Figure 9 shows schematic diagrams showing configurations of the second manifold 42 and the fourth manifold 46 according to the first embodiment. Figure 9A is a schematic diagram showing a shape of the second manifold 42 as horizontally viewed from the cell stacked body 10 side, and Figure 9B is a schematic diagram showing a shape of the fourth manifold 46 as horizontally viewed from the cell stacked body 10 side.

As shown in Figure 9A, the second manifold 42 includes the fuel electrode manifold which feeds the fuel electrode gas. The fuel electrode manifold of the second manifold 42 includes the piping joint part 42a, the piping joint part 42b, a gas introducing part 42c, and a gas discharging part 42d.

The piping joint part 42a is a joint part for feeding and communicates with the gas introducing part 42c. This piping joint part 42a feed the reaction gas to the gas introducing part 42c.

The piping joint part 42b is a joint part for discharging and communicates with the gas discharging part 42d. This piping joint part 42b discharges an unreacted gas which is not consumed by the electrochemical reaction from the gas discharging part 42d.

The gas introducing part 42c and the gas discharging part 42d are a plurality of spatial region parts arranged along the lateral surface of the cell stacked body 10 along the cell stacking direction.

As shown in Figure 9B, the fourth manifold 46 includes the fuel electrode manifold which feeds the fuel electrode gas. The fuel electrode manifold of the fourth manifold 46 includes a gas passing part 46a.

The gas passing part 46a is a spatial region part arranged along the lateral surface of the cell stacked body 10 along the cell stacking direction.

As shown in Figure 7, the gas introducing part 42c is provided on the lateral surface, of the cell stacked body 10, that is on the opposite side to the gas passing part 46a (fourth manifold 46). Moreover, the gas introducing part 42c introduces the oxidant gas into the cell stacked body 10. More in detail, the gas introducing part 42c introduces the fuel electrode gas to a third region of the fuel electrode gas flow channel grooves 140b in the cell stacked body 10. For example, the third region is a region of the fuel electrode gas flow channel grooves 140b between the first inlet part 14c (Figure 4B) and the first outlet part 14d (Figure 4B).

The gas discharging part 42d is provided on at least part of the lateral surface that the gas introducing part 42c is provided on. Moreover, the gas discharging part 42d discharges the fuel electrode gas from the cell stacked body 10. More in detail, the gas discharging part 42d discharges the fuel electrode gas from a fourth region of the fuel electrode gas flow channel grooves 140b in the cell stacked body 10. For example, the fourth region is a region of the fuel electrode gas flow channel grooves 140b between the second inlet part 14e (Figure 4B) and the second outlet part 14f (Figure 4B).

The gas passing part 46a is provided, for the cell stacked body 10, on the lateral surface that is on the opposite side to the gas introducing part 42c (second manifold 42). Moreover, the gas passing part 46a allows communication between the third region in the cell stacked body 10 and the fourth region, in the cell stacked body 10, different from the relevant third region such that the fuel electrode gas passes through. More in detail, the gas passing part 46a allows communication between the third region of the fuel electrode gas flow channel grooves 140b in the cell stacked body 10 and the fourth region of the fuel electrode gas flow channel grooves 140b in the cell stacked body 10.

Next, flows of the reaction gas (fuel electrode gas) are described with reference to Figure 7.

In the example shown in Figure 7, the fuel electrode gas (fuel) is fed to the gas introducing part 42c via the piping joint part 42a. The fuel electrode gas flows in the fuel electrode gas flow channel grooves 140b (Figure 4B) via the first inlet parts 14c of the fuel electrode flow channel plates 14 that communicate with the gas introducing part 42c among the fuel electrode flow channel plates 14 stacked in the cell stacked body 10, and is discharged from the first outlet parts 14d (Figure 4B) to the gas passing part 46a of the fourth manifold 46. The fuel electrode gas having been discharged to the gas passing part 46a flows in the fuel electrode gas flow channel grooves 140b (Figure 4B) via the second inlet parts 14e (Figure 4B) of the fuel electrode flow channel plates 14 that communicate with the gas passing part 46a among the fuel electrode flow channel plates 14 stacked in the cell stacked body 10, and is discharged from the second outlet parts 14f (Figure 4B) to the gas discharging part 42d of the second manifold 42. The fuel electrode gas having been discharged to the gas discharging part 42d is discharged from the piping joint part 42b communicating with the gas discharging part 42d.

As above, the fuel electrode gas flows in the fuel electrode gas flow channel grooves 140b of the fuel electrode flow channel plates 14 in the cell stacked bodies 10, and thereby, the fuel electrode gas is fed to the fuel electrodes of the electrolyte membranes 12.

Figure 10 is a schematic diagram showing arrangement and electric connection of the cell stacked bodies 10 according to the first embodiment. Notably, in Figure 10, the terminals 300 described with reference to Figure 6, that is, the positive electrode terminals and the negative electrode terminals are omitted. The fastening plates 100 that are denoted with + signs are the fastening plates 100 on the positive electrode terminal sides. The fastening plates 100 that are denoted with - signs are the fastening plates 100 on the negative electrode terminal sides.

The fuel cell 1 further includes the positive electrode terminals, the negative electrode terminals, and electrode connecting parts 401.

The cell stacked bodies 10 are arranged to line up such that the orientations of the positive electrode terminal and the negative electrode terminal of each of them are reverse to those of adjacent one of the cell stacked bodies 10.

The positive electrode terminals and the negative electrode terminals are provided in both end parts of the cell stacked bodies 10 in the stacking direction, and are electrically connected to the cell stacked bodies 10 (current collector plates 20).

The electrode connecting parts 401 electrically connect the positive electrode terminals and the negative electrode terminals of the adjacent cell stacked bodies 10 so as to connect the plurality of cell stacked bodies 10 electrically in series. The electrode connecting parts 401 are conductors such, for example, as bus bars. Connecting the plurality of cell stacked bodies 10 in series can afford high voltage. Thereby, current can be restrained from rising, and losses in electric power can be reduced. Consequently, efficiency in an electricity system can be improved. Moreover, since the orientations of the positive electrode terminal and the negative electrode terminal are reverse to those of the adjacent cell stacked bodies 10, the electrode connecting parts 401 as wiring can be shortened. Consequently, losses in electric power due to the electrode connecting parts 401 can be reduced, and the volume of the fuel cell 1 can be reduced. Furthermore, the shapes of the electrode connecting parts 401 can be of one type, and the number of types of components can be reduced.

As above, according to the first embodiment, the fifth manifolds 48 are provided between the cell stacked bodies 10 arranged to line up in the first direction perpendicular to the stacking direction, and include the gas flow channel parts 48a allowing communication between the cell stacked bodies 10 such that the reaction gas (oxidant gas) passes through. The fifth manifolds are used for connection between the cell stacked bodies 10, and function as pipes for causing the reaction gas (oxidant gas) to flow so as to penetrate the plurality of cell stacked bodies 10. Thereby, the number of connection of cell stacked bodies 10 can be more easily modified in accordance with desired output of the fuel cell 1. Accordingly, with the first embodiment, the output of the fuel cell 1 in the external manifold scheme can be more easily modified.

As one of methods for increasing/decreasing the output of a fuel cell in the external manifold scheme, it is known to increase/decrease the number of stacking of fuel cell elements. In this case, it is needed to make exclusive design for manifolds individually each time, which causes problems of costs in mass production, increase in lead time in the case of molding with molds, and the like. Supposing that 1 kW, 2 kW, and 3 kW of outputs are to be obtained, for example, cell stacked bodies having 25, 50, and 75 fuel cell elements stacked, respectively, are possibly produced. In this case, the manifolds (for example, the manifolds 40, 42, 44, and 46 in Figure 1) need to be produced for each output such that they have lengths (for example, lengths in the Z-direction in Figure 1) that correspond to the number of stacking of fuel cell elements. Accordingly, 3×4=12 manifolds totally require their exclusive design individually, which causes time and costs.

In contrast, with the first embodiment, the output of the fuel cell 1 can be modified by modifying the numbers of fifth manifolds and cell stacked bodies 10. For example, in order to obtain the outputs of 2 kW and 3 kW according to the aforementioned supposition, two and three cell stacked bodies 10 each having 25 fuel cell elements 10a that afford 1 kW stacked only have to be connected, respectively. In such cases, the manifolds 40, 42, 44, and 46 used can be standardized. Moreover, only one type of fifth manifolds may be prepared. Accordingly, the number (types) of manifolds prepared through their exclusive design is five, that is, the number of the manifolds 40, 42, 44, 46, and 48. Accordingly, the number of designing of molds required for mass production can be reduced, which can lead to production of fuel cells 1 having various outputs in a shorter time. Moreover, with the first embodiment, the output of the fuel cell 1 can be increased without increasing stacking of the fuel cell elements 10a. Accordingly, for example, a temperature distribution and a variation in performance between the fuel cell elements 10a can be reduced, which can lead to a longer service life. Furthermore, with the first embodiment, a cell stacked body 10 that deteriorates in characteristics among the plurality of cell stacked bodies 10 can also be replaced. Accordingly, maintenance of the fuel cell 1 can be more facilitated.

Moreover, as one of methods for increasing/decreasing the output of a fuel cell in the external manifold scheme, for example, there can also be a possibility that pipes (collecting pipes) for the oxidant gas, the fuel electrode gas, and the cooling water are connected to each of manifolds for a plurality of cell stacked bodies each having 25 fuel cell elements stacked. In this case, the connection of the pipes, however, causes problems of a wide installation place, and moreover, a larger number of components and large costs. Moreover, in the case of using such collecting pipes, there is a possibility of more occurrence of variations in flow rates (flow variations) of the oxidant gas and the cooling water flowing in the cell stacked bodies as the distance of the cell stacked bodies in the first direction is longer. These flow variations of the oxidant gas and the cooling water cause a variation in cell voltages of the cell stacked bodies.

In contrast, with the first embodiment, the oxidant gas and the cooling water pass through the cell stacked bodies 10 via the fifth manifolds 48. Accordingly, as shown in Figure 7, no collecting pipes for the oxidant gas and the cooling water are needed. Therefore, expansion of the installation can be avoided as well as increase in the number of components and costs can be avoided. Moreover, reducing the flow variations of the oxidant gas and the cooling water can improve evenness in cell voltages of the cell stacked bodies 10, and moreover, can lead to a longer service life of the fuel cell 1. Furthermore, with the first embodiment, improvement in diffusibility of the reaction gas (oxidant gas) can attain higher performance of the fuel cell 1 than in the case of using the collecting pipes. Moreover, the improvement in diffusibility of the reaction gas (oxidant gas) can restrain carbon used in the fuel electrodes and the oxidant electrodes from being oxidized (corroding), which can lead to a longer service life of the fuel cell 1.

Moreover, the electrolyte membranes 12 that are in the cell stacked body 10 that the gas introducing part 40d is provided on is preferably thicker than the electrolyte membranes 12 in the other cell stacked bodies 10. In the internal humidification scheme as above, the cooling water is vaporized from the surfaces of the cooling water flow channel grooves 160b and humidifies the fuel cell elements 10a. The electrolyte membranes 12 that are close to the inlets for the oxidant gas and the fuel electrode gas tend to become dry and to deteriorate, however. Namely, the electrolyte membranes 12 that are in the cell stacked body 10 that the gas introducing part 40d is provided on tend to deteriorate. Deterioration of the electrolyte membranes 12 possibly causes cross leakage. The cross leakage is that the oxidant gas or the fuel electrode gas passes through the electrolyte membranes 12 due to membrane deterioration in the electrolyte membranes 12. Mixing of the oxidant gas and the fuel electrode gas due to the cross leakage, followed by the reaction between those, causes power generation performance of the fuel cell 1 to decrease. Therefore, the electrolyte membranes 12 of the cell stacked body 10 that the gas introducing part 40d is provided on are made thick, and thereby, the cross leakage can be reduced, which can lead to a longer service life of the fuel cell 1.

Notably, in the example shown in Figure 7, the oxidant gas returns to the first manifold 40 after passing through the first manifold 40 to the third manifold 44. Nevertheless, not limitedly, the oxidant gas may be discharged to the outside at the third manifold 44, not returning to the first manifold 40. In this case, the second flow channel part 48c and the gas passing part 44b do not need to be provided. Moreover, the gas discharging part 40e is to be provided at the position of the gas passing part 44b. Accordingly, the first flow channel part 48b allows communication between substantially the entirety of the oxidant gas flow channel grooves 160a in the cell stacked body 10 and substantially the entirety of the oxidant gas flow channel grooves 160a in the adjacent cell stacked body 10. The gas discharging part 40e is to be provided, for the cell stacked body 10 that is at the other end in the first direction, on the lateral surface on the opposite side to the gas flow channel part 48a.

Moreover, the fuel electrode gas may also be discharged to the outside at the fourth manifold 46, not returning to the second manifold 42.

Moreover, the reaction gas is any of the fuel electrode gas and the oxidant gas. More in detail, the reaction gas is any of a hydrogen-containing gas and an oxygen-containing gas.

Moreover, the cooling water flow channel grooves 160b may be provided in the fuel electrode flow channel plates 14.

### (Modification)

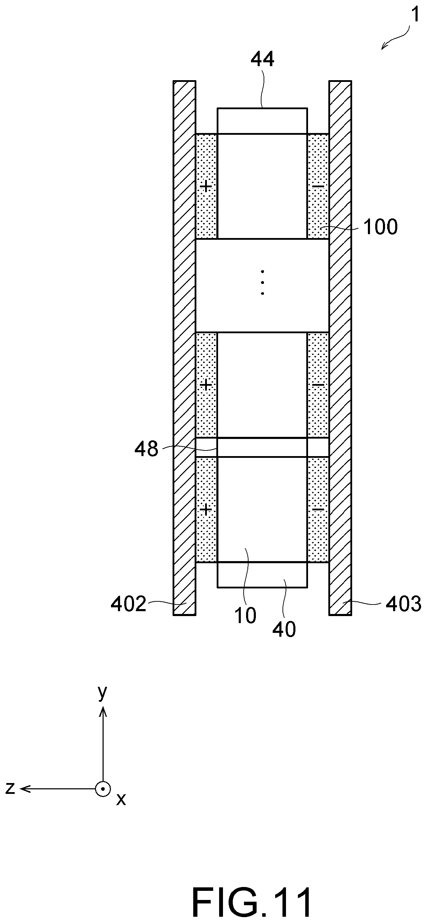

Figure 11 is a schematic diagram showing arrangement and electric connection of the cell stacked bodies 10 according to a modification. The modification of the first embodiment is different from the first embodiment in that the cell stacked bodies 10 are electrically connected in parallel.

The fuel cell 1 further includes a positive electrode connecting part 402 and a negative electrode connecting part 403.

The cell stacked bodies 10 are arranged to line up such that the orientations of the positive electrode terminal and the negative electrode terminal are the same as those of adjacent one of the cell stacked bodies 10.

The positive electrode connecting part 402 electrically connects the positive electrode terminals of the adjacent cell stacked bodies 10 such that the plurality of cell stacked bodies 10 are electrically connected in parallel. The positive electrode connecting part 402 is a conductor such as a bus bar, for example.

The negative electrode connecting part 403 electrically connects the negative electrode terminals of the adjacent cell stacked bodies 10 such that the plurality of cell stacked bodies 10 are electrically connected in parallel. The negative electrode connecting part 403 is a conductor such as a bus bar, for example. Connecting the plurality of cell stacked bodies 10 in parallel can afford large current. Moreover, the voltage of the fuel cell 1 can be reduced less than in the case of series connection. Consequently, design for voltage endurance (insulation design) is facilitated. Accordingly, any of the series connection described for the first embodiment and this parallel connection can be selected, for example, in accordance with desired electric design, output of one cell stacked body 10, and the like.

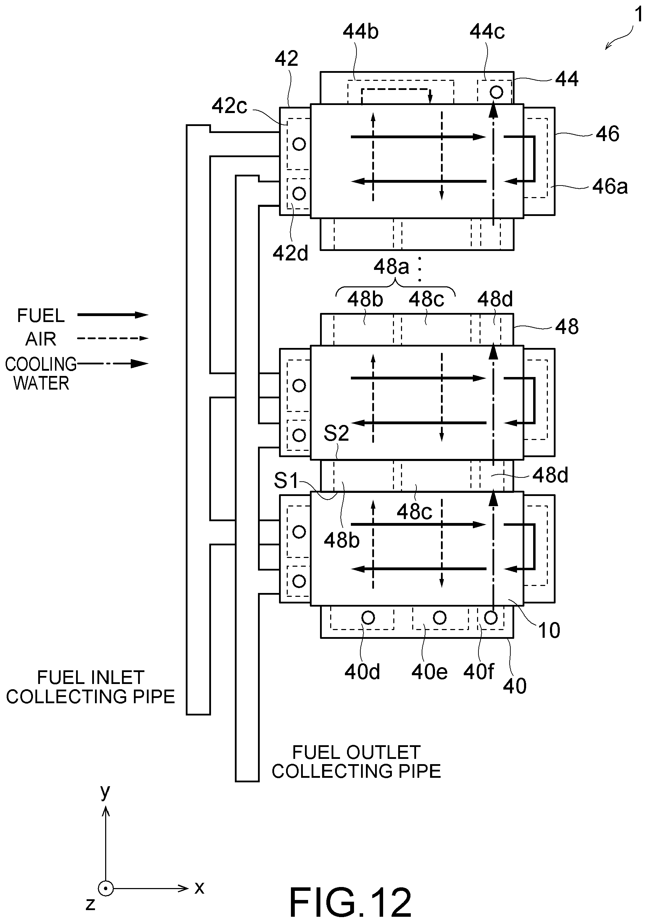

Figure 12 is a schematic diagram showing a configuration of the fuel cell 1 according to the modification. Notably, although the cooling water is illustrated to flow and advance straight, the cooling water flow channel grooves 160b are provided over substantially the entirety of each principal plane 16b in reality. Moreover, the oxidant gas flow channel grooves 160a are also provided over substantially the entirety of each principal plane 16a.

In the modification, water inlet and outlet for each cell stacked body 10 are provided such that their positions in the X-direction are substantially the same. This is because the orientations of the positive electrode and the negative electrode of the cell stacked body 10 are the same as the orientations of the positive electrode and the negative electrode of adjacent one of the cell stacked bodies 10, for example. In this case, the same type of oxidant electrode flow channel plates 16 can be used for each of the plurality of cell stacked bodies 10.

The other configuration of the fuel cell 1 according to the modification is similar to the corresponding configuration of the fuel cell 1 according to the first embodiment, and its detailed description is omitted.

The fuel cell 1 according to the modification can attain the similar effects to those for the first embodiment.

### (Second Embodiment)

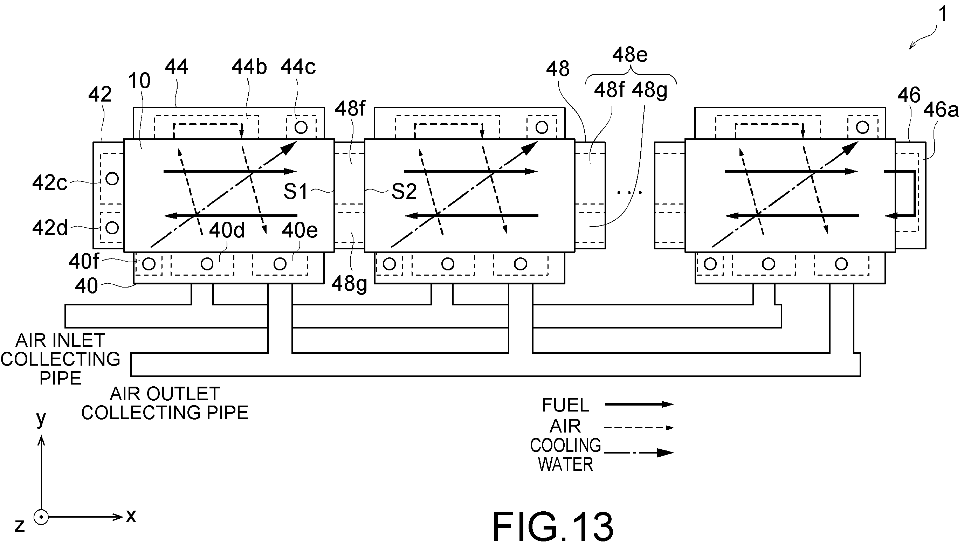

Figure 13 is a schematic diagram showing a configuration of a fuel cell 1 according to a second embodiment. The second embodiment is different from the first embodiment in that the fuel electrode gas in place of the oxidant gas passes through so as to penetrate a plurality of cell stacked bodies 10. Accordingly, the fuel electrode gas passes through fifth manifolds 48. Notably, in the example shown in Figure 13, the cooling water does not pass through the fifth manifolds 48 but is fed for each of the cell stacked bodies 10. In the example shown in Figure 13, collecting pipes for the cooling water are omitted. Nevertheless, an inlet collecting pipe for the cooling water is connected to a piping joint part 40a of each of the cell stacked bodies 10, for example. An outlet collecting pipe for the cooling water is connected to a piping joint part 44a of each of the cell stacked bodies 10, for example.

In the example shown in Figure 13, the cell stacked bodies 10 are arranged to line up in the first direction perpendicular to the stacking direction. The first direction in the second embodiment is the X-direction in the example shown in Figure 13. Moreover, the cell stacked bodies 10 are arranged such that their orientations in the Z-direction are the same as those of the adjacent cell stacked bodies 10. In this case, the plurality of cell stacked bodies 10 are electrically connected in parallel as shown in Figure 12. Nevertheless, not limitedly, the cell stacked bodies 10 may be arranged such that their orientations in the Z-direction are reverse to those of the adjacent cell stacked bodies 10. In this case, the cell stacked bodies 10 are arranged so as to rotate relative to the adjacent cell stacked bodies 10 by 180° around the Y-direction, for example. Moreover, in this case, the plurality of cell stacked bodies 10 are electrically connected in series as shown in Figure 11.

The fifth manifolds 48 are provided between the cell stacked bodies 10 arranged to line up in the first direction (X-direction). As shown in Figure 13, for the cell stacked body 10 that is at one end in the first direction, the fifth manifold and the second manifold 42 are respectively arranged on opposite sides of the lateral surfaces of the cell stacked body 10. Moreover, for the cell stacked body 10 that is at the other end in the first direction, the fifth manifold and the fourth manifold 46 are respectively arranged on opposite sides of the lateral surfaces of the cell stacked body 10.

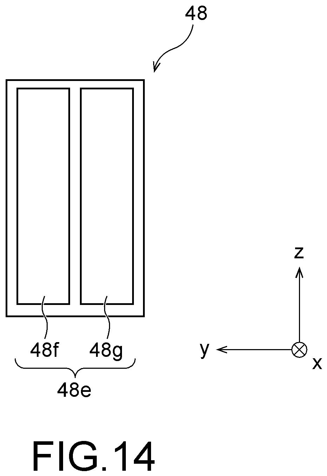

Figure 14 is a schematic diagram showing a configuration of the fifth manifold 48 according to the second embodiment. Figure 14 is a schematic diagram showing a shape of the fifth manifold 48 as horizontally viewed from the side of the cell stacked body 10 that the second manifold 42 is provided on.

The fifth manifold 48 includes a fuel electrode manifold. Notably, a cooling water manifold is not provided in the fifth manifold 48 according to the second embodiment. The fuel electrode manifold of the fifth manifold 48 includes a gas flow channel part 48e.

A shape of the gas flow channel part 48e may be similar to the shape of the gas flow channel part 48a according to the first embodiment in Figure 8C.

As shown in Figure 13, the gas flow channel part 48e includes a first flow channel part 48f and a second flow channel part 48g.

The first flow channel part 48f allows communication between the third region in the cell stacked body 10 and the third region in the adjacent cell stacked body 10. More in detail, the first flow channel part 48f allows communication between the third region of fuel electrode gas flow channel grooves 140b in the cell stacked body 10 and the third region of the fuel electrode gas flow channel grooves 140b in the adjacent cell stacked body 10.

The second flow channel part 48g allows communication between the fourth region in the cell stacked body 10 and the fourth region in the adjacent cell stacked body. More in detail, the second flow channel part 48g allows communication between the fourth region of the fuel electrode gas flow channel grooves 140b in the cell stacked body 10 and the fourth region of the fuel electrode gas flow channel grooves 140b in the adjacent cell stacked body 10. Notably, a partition is provided between the first flow channel part 48f and the second flow channel part 48g.

Accordingly, in the second embodiment, relationship between the oxidant gas and the fuel electrode gas is approximately reverse to that in the first embodiment. Moreover, the third region and the fourth region according to the second embodiment correspond to the first region and the second region according to the first embodiment, respectively.

Notably, in the example shown in Figure 13, an opening area of the first flow channel part 48f is larger than an opening area of the second flow channel part 48g. Accordingly, a reaction efficiency of the fuel electrode reaction on the fuel electrodes is equalized more in the fuel electrode flow channels. Nevertheless, not limitedly, the opening area of the first flow channel part 48f may be substantially the same as the opening area of the second flow channel part 48g.

The other configuration of the fuel cell 1 according to the second embodiment is similar to the corresponding configuration of the fuel cell 1 according to the first embodiment, and its detailed description is omitted.

The fuel cell 1 according to the second embodiment can attain the effects similar to those for the first embodiment.

While some embodiments of the present invention have been described, these embodiments are presented as examples and not intended to limit the scope of the invention. These embodiments can be implemented in various other modes, and various omissions, replacements, and modifications for those may occur without departing from the spirit of the invention. As with these included in the scope and spirit of the invention, the embodiments and their alterations are included in the scope of the invention disclosed in the claims and its equivalents.

## Claims

1. A fuel cell comprising:
a cell stacked body having elements stacked, each element having: an electrolyte membrane; a fuel electrode and an oxidant electrode between which the electrolyte membrane is interposed; a fuel electrode flow channel plate in which a gas flow channel facing the fuel electrode is provided; and an oxidant electrode flow channel plate in which a gas flow channel facing the oxidant electrode is provided; and
a manifold provided on a lateral surface, of the cell stacked body, along a stacking direction of the cell stacked body, the manifold being configured to feed a reaction gas to the fuel electrode flow channel plate or the oxidant electrode flow channel plate in the cell stacked body, wherein
the manifold includes a gas flow channel part that is provided between a plurality of the cell stacked bodies arranged to line up in a first direction perpendicular to the stacking direction and that allows communication between the cell stacked bodies such that the reaction gas passes through.

2. The fuel cell according to Claim 1, wherein the manifold further includes, for the cell stacked body that is at one end in the first direction, a gas introducing part that introduces the reaction gas into the cell stacked body, the gas introducing part being provided on the lateral surface that is on an opposite side to the gas flow channel part.

3. The fuel cell according to Claim 2, wherein the electrolyte membrane that is in the cell stacked body that the gas introducing part is provided on is thicker than the electrolyte membrane in another cell stacked body.

4. The fuel cell according to Claim 2 or 3, wherein
the manifold further includes:
for the cell stacked body that is at another end in the first direction, a gas passing part that allows communication between a first region in the cell stacked body and a second region, in the cell stacked body, different from the first region such that the reaction gas passes through, the gas passing part being provided on the lateral surface that is on an opposite side to the gas flow channel part; and
a gas discharging part that discharges the reaction gas from the cell stacked body, the gas discharging part being provided on at least part of the lateral surface that the gas introducing part is provided on.

5. The fuel cell according to Claim 4, wherein
the gas flow channel part has:
a first flow channel part that allows communication between the first region in the cell stacked body and the first region in adjacent one of the cell stacked bodies; and
a second flow channel part that allows communication between the second region in the cell stacked body and the second region in the adjacent one of the cell stacked bodies.

6. The fuel cell according to any one of Claims 1 to 5, wherein
in the fuel electrode flow channel plate or the oxidant electrode flow channel plate, a cooling water flow channel is further provided, and
the manifold further includes a cooling water flow channel part that is provided between the plurality of cell stacked bodies arranged to line up in the first direction, and that allows communication between the cell stacked bodies such that cooling water passes through.

7. The fuel cell according to Claim 6, wherein
the manifold further includes:
for the cell stacked body that is at one end in the first direction, a cooling water introducing part that introduces the cooling water into the cell stacked body, the cooling water introducing part being provided on the lateral surface that is on an opposite side to the gas flow channel part; and
for the cell stacked body that is at another end in the first direction, a cooling water discharging part that discharges the cooling water from an inside of the cell stacked body, the cooling water discharging part being provided on the lateral surface that is on an opposite side to the gas flow channel part.

8. The fuel cell according to any one of Claims 1 to 7, further comprising:
a positive electrode terminal and a negative electrode terminal that are provided in both end parts of the cell stacked body in the stacking direction and are electrically connected to the cell stacked body; and
an electrode connecting part that electrically connects the positive electrode terminals and the negative electrode terminals of the adjacent cell stacked bodies such that the plurality of cell stacked bodies are electrically connected in series.

9. The fuel cell according to Claim 8, wherein the cell stacked bodies are arranged to line up such that orientations of the positive electrode terminal and the negative electrode terminal are reverse to those of adjacent one of the cell stacked bodies.

10. The fuel cell according to any one of Claims 1 to 7, further comprising:
a positive electrode terminal and a negative electrode terminal that are provided in both end parts of the cell stacked body in the stacking direction and are electrically connected to the cell stacked body; and
a positive electrode connecting part that electrically connects the positive electrode terminals of the adjacent cell stacked bodies and a negative electrode connecting part that electrically connects the negative electrode terminals of the adjacent cell stacked bodies such that the plurality of cell stacked bodies are electrically connected in parallel.

11. The fuel cell according to Claim 10, wherein the cell stacked bodies are arranged to line up such that orientations of the positive electrode terminal and the negative electrode terminal are the same as those of adjacent one of the cell stacked bodies.

12. The fuel cell according to any one of Claims 1 to 11, wherein the gas flow channel part is provided between a first lateral surface of the cell stacked body and a second lateral surface, of adjacent one of the cell stacked bodies, that faces the first lateral surface.

13. The fuel cell according to any one of Claims 1 to 12, wherein the reaction gas is any of a hydrogen- containing gas and an oxygen-containing gas.

14. A manifold for a fuel cell, the manifold being provided on a lateral surface, of a cell stacked body, along a stacking direction of the cell stacked body, the cell stacked body having elements stacked, each element having: an electrolyte membrane; a fuel electrode and an oxidant electrode between which the electrolyte membrane is interposed; a fuel electrode flow channel plate in which a gas flow channel facing the fuel electrode is provided; and an oxidant electrode flow channel plate in which a gas flow channel facing the oxidant electrode is provided, the manifold being configured to feed a reaction gas to the fuel electrode flow channel plate or the oxidant electrode flow channel plate in the cell stacked body, the manifold comprising a gas flow channel part that is provided between a plurality of the cell stacked bodies arranged to line up in a first direction perpendicular to the stacking direction and that allows communication between the cell stacked bodies such that the reaction gas passes through.
